# EUROPEAN PATENT APPLICATION

(11) **EP 2 790 153 A2**
(43) Date of publication of application: **15.10.2014**
(21) Application number: 14154960.0
(22) Date of filing: 13.02.2014
(51) Int. Cl.: G06T 7/00, G06F 17/30, G06K 9/00

(54) **Environment evaluation apparatus, method and program**

(30) Priority: 28.02.2013 JP 2013039951
(71) Applicant: Kabushiki Kaisha Toshiba, Tokyo 105-8001 (JP)
(72) Inventor: Yamamoto, Masahiro, Minato-ku, Tokyo 105-8001 (JP)
(74) Representative: Granleese, Rhian Jane

(57) **Abstract**

According to one embodiment, an environment evaluation apparatus (100) includes a generation unit (210), a storage (103) and a comparison unit (214). The generation unit (210) generates a feeling index representing a feeling toward a target image to be processed. The storage (103) stores a plurality of comparative images and corresponding comparative feeling indexes, according to each of feeling categories. The comparison unit (214) extracts, as a similar image, at least one of the comparative images corresponding to at least one of the comparative feeling indexes having a degree of similarity to the feeling index not less than a threshold value, by comparing the feeling index with the comparative feeling indexes.

## Description

### FIELD

Embodiments described herein relate generally to an environment evaluation apparatus, method and program.

### BACKGROUND

Evaluation of a living environment such as an interior space highly influences residents and users of the space, the space itself, and uses and purposes of the space, and hence is very important.

Evaluation of brightness considered in lighting design of an interior space for everyday life has conventionally been carried out with a focus on illumination and discomforting glare (dazzle) of a lighting device. In recent years, however, an evaluation method with a focus on luminance, which is based on human subjectivity, has been proposed.

### BRIEF DESCRIPTION OF THE DRAWINGS

FIG. 1 is a block diagram illustrating an environment evaluation apparatus according to a first embodiment.
FIG. 2 is a block diagram illustrating details of an analysis unit and an analytical evaluation calculation unit.
FIG. 3 is a flowchart illustrating an operation of the environment evaluation apparatus according to the first embodiment.
FIG. 4 illustrates an example of reference images stored in a storage.
FIG. 5 illustrates an example of a reference feeling index.
FIG. 6 illustrates an example of a partial characteristic quantity.
FIG. 7 illustrates an example of a common characteristic quantity.
FIG. 8 illustrates a display example of the environment evaluation apparatus according to the first embodiment.
FIG. 9 is a block diagram illustrating an environment evaluation apparatus as a modification of the first embodiment.
FIG. 10 illustrates an example of displaying a parameter change window on a display.
FIG. 11 illustrates another example of image display on the display.
FIG. 12 is a conception diagram illustrating an example of using an environment evaluation apparatus according to a second embodiment.
FIG. 13 is a block diagram illustrating the environment evaluation apparatus according to the second embodiment.
FIG. 14 is a conception diagram illustrating a spectrum of lighting.
FIG. 15 illustrates an example of setting a lighting spectrum in the environment evaluation apparatus according to the second embodiment.
FIG. 16 illustrates another example of setting the lighting spectrum in the environment evaluation apparatus according to the second embodiment.
FIG. 17 is a conception diagram illustrating a lighting spectrum which varies with time.
FIG. 18 is a block diagram illustrating an environment evaluation apparatus according to a third embodiment.
FIG. 19 illustrates an example of displaying a composition image on a display according to the third embodiment.
FIG. 20 is a block diagram illustrating an environment evaluation apparatus according to a fourth embodiment.
FIG. 21 illustrates an example of regional data.
FIG. 22 illustrates an example of evaluating an environment using feeling categories.
FIG. 23 is a block diagram illustrating an example of installing the environment evaluation apparatus.
FIG. 24 illustrates the concept of a field of view.
FIG. 25 illustrates the concept of depth perception.
FIG. 26 illustrates a method of correcting depth perception.

### DETAILED DESCRIPTION

In the above-described evaluation method with a focus on luminance, it is possible to evaluate brightness of the overall space, but it is not possible to evaluate the effect of the space on human feelings.

In general, according to one embodiment, an environment evaluation apparatus includes a generation unit, a storage and a comparison unit. The generation unit is configured to generate a feeling index representing a feeling toward a target image to be processed, the feeling index includes at least one of a first index, a second index and a third index, the first index is obtained by performing frequency analysis on the target image, the second index is obtained by performing histogram analysis on the target image, the third index is a characteristic quantity of a group of pixels relating to at least one of a color and a luminance from a partial region of the target image. The storage is configured to store a plurality of comparative images and corresponding comparative feeling indexes, according to each of feeling categories, the comparative images are images with which the target image is to be compared and are classified into the feeling categories using the comparative feeling indexes, the comparative feeling indexes represent feelings toward the comparative images, the feeling categories are categories based on feelings toward images. The comparison unit is configured to extract, as a similar image, at least one of the comparative images corresponding to at least one of the comparative feeling indexes having a degree of similarity to the feeling index not less than a threshold value, by comparing the feeling index with the comparative feeling indexes.

Hereinafter, an environment evaluation apparatus, method and program according to an embodiment of the present disclosure will now be described in detail with reference to the accompanying drawings. In the embodiments that will be described below, the elements denoted by the same reference numerals perform the same operation, and repetitive description of such elements will be omitted.

### (First Embodiment)

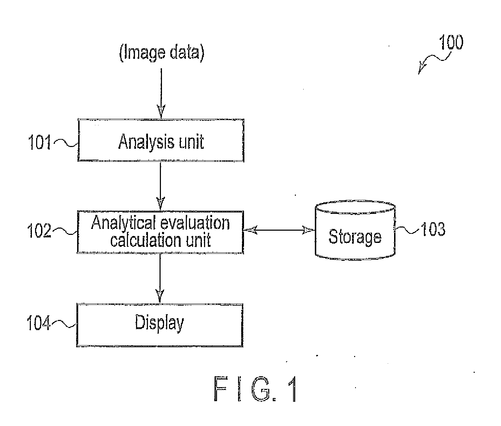

An environment evaluation apparatus according to the first embodiment will now be described with reference to the block diagram shown in FIG. 1. An environment evaluation apparatus 100 according to the first embodiment includes an analysis unit 101, an analytical evaluation calculation unit 102, a storage 103, and a display 104.

The analysis unit 101 receives image data from an external device, performs analytical processing such as a filtering process on a target image to be processed, which is represented by the image data, and generates a recomposition image. The image data used in the present embodiment may be any of a still image, a panoramic image obtained by combining a plurality of still images, or a moving image, from which the environment can be specified.

The analytical evaluation calculation unit 102 receives the recomposition image from the analysis unit 101, performs analytical evaluation on the recomposition image, and generates a feeling index. The feeling index is an index representing feelings toward an image, and is a tensor or a vector calculated on the basis of information on luminance and colors, for example. In the present embodiment, a nine-dimensional vector is used as the feeling index, by way of illustration.

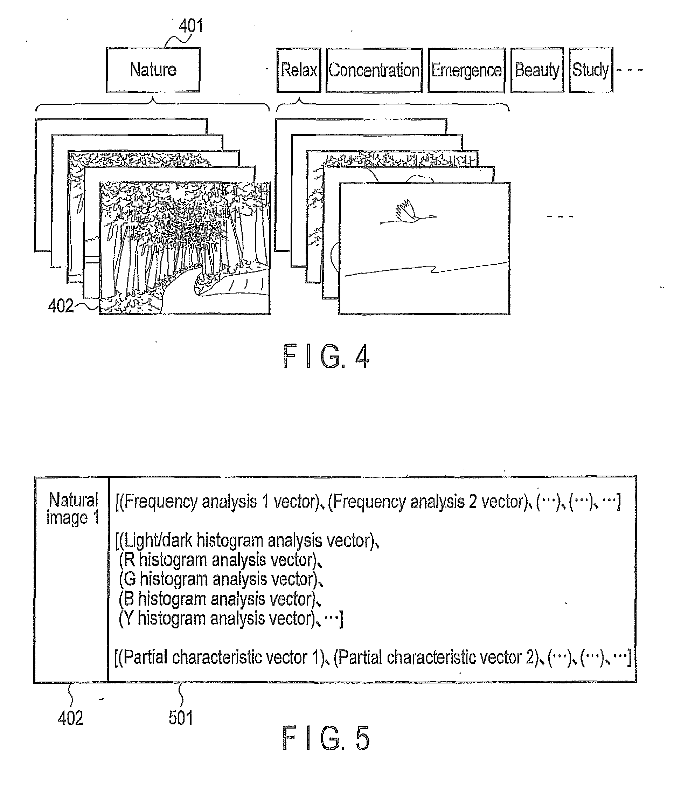

The analytical evaluation calculation unit 102 generates a feeling index also for a reference image and a comparative image as well, in a procedure similar to that of the target image. The reference image is an image based on which a reference feeling index, which is used as the standard of the feeling index, is generated for each of a plurality of feeling categories defined on the basis of feelings toward images. In other words, the reference feeling index represents feelings toward the reference image. The reference image will be described in detail later with reference to FIG. 4. The comparative image is an image with which the target image is compared, and the analytical evaluation calculation unit 102 generates a comparative feeling index on the basis of the comparative image. In the present embodiment, the comparative image is an image relating to a lighting environment of an interior space, but is not limited thereto and may be an image based on the concept of feelings of the user, such as monotone and pop.

Further, the analytical evaluation calculation unit 102 receives a comparative feeling index from the storage 103, which will be described later, compares the feeling index of the target image with the comparative feeling index, and extracts a comparative image corresponding to a comparative feeling index having a degree of similarity to the feeling index not less than a threshold value as a similar image.

The storage 103 stores each of the reference image and the reference feeling index, and the comparative image and the comparative feeling index.

The display 104 is a display, for example, and displays the target image and at least one of the comparative image and the reference image.

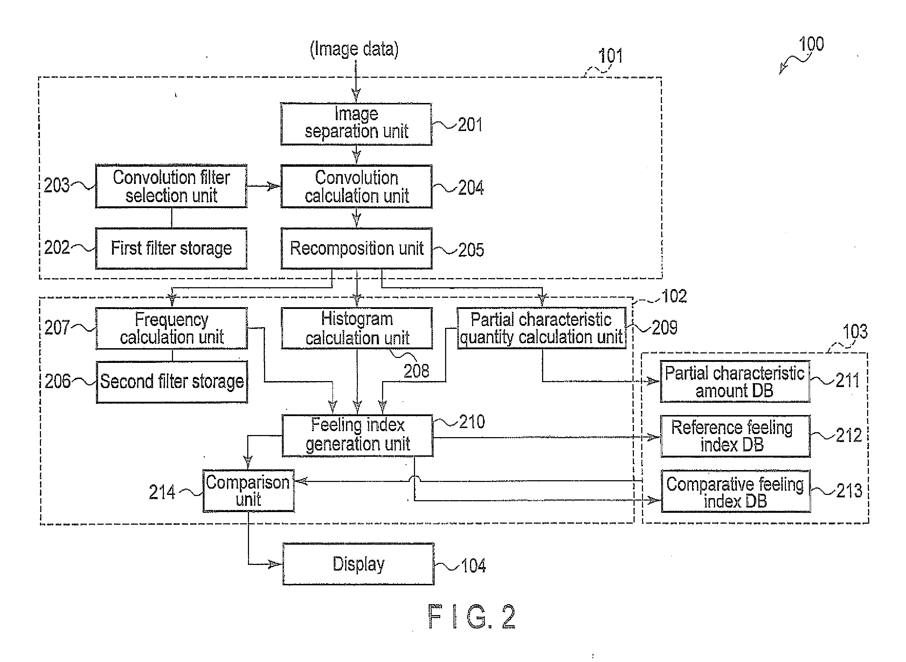

The analysis unit 101 and the analytical evaluation calculation unit 102 will now be described in detail with reference to the block diagram shown in FIG. 2.

The analysis unit 101 includes an image separation unit 201, a first filter storage 202, a convolution filter selection unit 203, a convolution calculation unit 204, and a recomposition unit 205. The analytical evaluation calculation unit 102 includes a second filter storage 206, a frequency calculation unit 207, a histogram calculation unit 208, a partial characteristic quantity calculation unit 209, a feeling index generation unit 210, a partial characteristic quantity database 211, a reference feeling index database 212, a comparative feeling index database 213, and a comparison unit 214.

The image separation unit 201 receives image data from outside, extracts information on a color component such as red (R), green (G), blue (b), or yellow (Y), and luminance of each pixel, and obtains information on the color component and luminance as pixel information items.

The first filter storage 202 stores a first filter and a filter coefficient corresponding to the first filter. The first filter is a filter used to reproduce feelings toward an image through human vision, and includes an adaptive filter and a non-linear filter, for example.

The filter selection unit 203 selects a filter from the first filter storage 202.

The convolution calculation unit 204 receives pixel information items from the image separation unit 201 and the selected filter from the filter selection unit 203, and performs convolution calculation on the pixel information items of the target image using the filter.

The recomposition unit 205 receives the pixel information items subjected to the convolution from the convolution calculation unit 204, recomposes an image on the basis of the pixel information items, and obtains a recomposition image. In this case, a recomposition image of pixel information items on a color, a recomposition image of pixel information items on luminance, and a recomposition image of pixel information items on a color and luminance can be obtained. The obtained recomposition images should be selected according to a necessary process and used in a later process.

The second filter storage 206 stores a second filter and a filter coefficient corresponding to the second filter. The second filter is a filter used to analyze an image, and may be the same as or different from the filter stored in the first filter storage 202.

In the present embodiment, an analytical parameter used to perform the Fourier transform, fractal coefficient calculation, or box counting is stored.

The frequency calculation unit 207 receives a recomposition image from the recomposition unit 205, the second filter from the second filter storage 206, performs frequency analysis, and thereby obtains a frequency analysis result (also referred to a first index). In the present embodiment, a case is mainly assumed where the Fourier transform and a fractal coefficient calculation, or box counting is performed, but any calculation that essentially performs time and frequency conversion and frequency analysis on the basis of a two-dimensional structure can be performed.

The histogram calculation unit 208 receives a recomposition image from the recomposition unit 205, performs histogram analysis on the recomposition image, calculates variation between a color histogram and a luminance histogram, and obtains a histogram analysis result (also referred to as a second index).

The partial characteristic quantity calculation unit 209 receives the recomposition image from the recomposition unit 205, calculates a degree of coincidence with an arbitrary image basis on the basis of a group of pixels of a partial region extracted from the recomposition image, and extracts a partial characteristic quantity (also referred to as a third index). In the present embodiment, a color distribution, for example, can be handled as a tensor and can be used by being compressed into a vector.

The feeling index generation unit 210 receives the frequency analysis result from the frequency calculation unit 207, the histogram analysis result from the histogram calculation result 208, and the partial characteristic quantity from the partial characteristic quantity calculation unit 209, and generates a feeling index using at least one of the frequency analysis result, the histogram processing result and the partial characteristic quantity as an element.

The partial characteristic quantity database 211 receives the partial characteristic quantity from the partial characteristic quantity calculation unit 209, and stores the partial characteristic quantity and an image including a region represented by the partial characteristic quantity, by associating the partial characteristic quantity with the image including the region represented by the partial characteristic quantity.

The reference feeling index database 212 receives the reference feeling index from the feeling index generation unit 210, and stores the reference image and the reference feeling index by associating the reference image with the reference feeling index. The reference image may be associated with the reference feeling index after image data of the reference image is input into the analysis unit 101 and stored in the reference feeling index database 212, and the reference feeling index is generated. Alternatively, the original reference image may be kept when a recomposition image is generated, and, after a reference feeling index is generated, associated with the reference feeling index and stored in the reference feeling index database 212.

The comparative feeling index database 213 receives the comparative feeling index from the feeling index generation unit 210, and stores the comparative image and the comparative feeling index by associating the comparative image with the comparative feeling index. Similarly, image data of the comparative image may be input into the analysis unit 101 and stored in the comparative feeling index database 213.

The comparison unit 214 receives the feeling index from the feeling index generation unit 210, and the comparative feeling index from the comparative feeling index database 213. The comparative unit 214 compares the feeling index with the comparative feeling index, and extracts a comparative image corresponding to the comparative feeling index having a degree of similarity not less than a threshold value as a similar image.

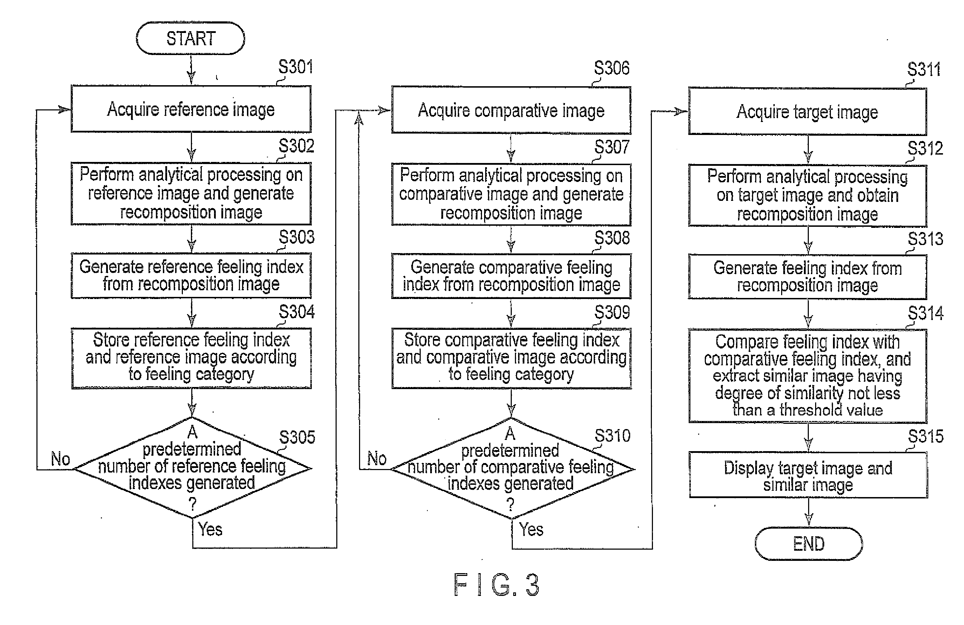

Next, an operation of the environment evaluation apparatus according to the first embodiment will be described with reference to the flowchart shown in FIG. 3.

In step S301, the analysis unit 101 acquires a reference image.

In step S302, the analysis unit 101 performs analytical processing on the reference image and generates a recomposition image.

In step S303, the analytical evaluation calculation unit 102 generates a reference feeling index from the recomposition image.

In step S304, the storage 103 stores the reference feeling index and the reference image according to the feeling category.

In step S305, the analytical evaluation calculation unit 102 determines whether a predetermined number of reference feeling indexes have been generated or not. When the predetermined number of reference feeling indexes have been generated, the procedure continues to step S306. When the predetermined number of reference feeling indexes have not been generated, the procedure returns to step S301 and the same process is repeated.

In step S306, the analysis unit 101 acquires a comparative image.

In step S307, the analysis unit 101 performs analytical processing on the comparative image and generates a recomposition image.

In step S308, the analytical evaluation calculation unit 102 generates a comparative feeling index from the recomposition image.

In step S309, the storage 103 stores the comparative feeling index and the comparative image according to the feeling category.

In step S31 0, the analytical evaluation calculation unit 102 determines whether a predetermined number of comparative feeling indexes have been generated or not. When the predetermined number of comparative feeling indexes have been generated, the procedure continues to step S311. When the predetermined number of comparative feeling indexes have not been generated, the procedure returns to step S306, and repeats the procedure from step S306 to step S310.

In step S311, the analysis unit 101 acquires a target image.

In step S312, the analysis unit 101 performs analytical processing on the target image and generates a recomposition image.

In step S313, the analytical evaluation calculation unit 102 generates a feeling index from the recomposition image.

In step S314, the analytical evaluation calculation unit 102 compares the recomposition index with the comparative feeling indexes, and extracts a similar image having a degree of similarity not less than a threshold value.

In step S315, the target image and the similar image are displayed on a screen. This is the end of the operation of the environment evaluation apparatus according to the first embodiment.

In the interest of faster calculation, the feeling index may be calculated for an image before being recomposed. In that case, the reference feeling index, the comparative feeling index, and the feeling index should be calculated by causing the analytical evaluation calculation unit 102 to process the reference image, the comparative image, and the target image, without causing the analysis unit 101 to perform analytical processing.

Next, an example of a reference image stored in the reference feeling index database 212 will now be described with reference to FIG. 4.

As shown in FIG. 4, the reference feeling index database 212 stores reference images 402 classified according to the feeling category 401.

A plurality of reference images are stored in each feeling category. In the example of FIG. 4, five reference images are included in each feeling category. It is also possible to store five or more reference images in each feeling category, or to store reference images such that the number of reference images classified into one feeling category is greater than the number of reference images classified into another feeling category, so as to perform weighting. For example, in order to give more weight in evaluation of the feeling category "flash", dimensional extension should be performed by increasing the number of reference images belonging to "flash".

Association of reference images with reference feeling indexes will be described with reference to FIG. 5. As shown in FIG. 5, the reference image 402 and the reference feeling index 501 calculated for each reference image are stored by being associated with each other.

The reference feeling index can be calculated using a technique in which human feelings, including potential levels, are evaluated quantitatively and qualitatively using an approach based on neuroscience, psychology, and physiology. Examples of such a technology include functional magnetic resonance imaging (fMRI), magnetoencephalography (MEG), near-infrared spectroscopy (NIRS), functional NIRS (fNIRS), optical topography, electroencephalography (EEG), and a semantic differential (SD) technique. In this case, reference feeling indexes of reference images obtained by measurement using FMRI and representing brain activity similar to the general brain activity for "nature", "relax", "concentration", "emergence (flash)", "beauty", and "study" are classified into the respective feeling categories. The classification into the feeling categories may be performed by machine learning using an approach such as deep learning, or may be performed by the user.

The classification into the feeling categories using a partial characteristic quantity makes it possible to classify human feelings toward images, such as nature, concentration, and relax, quantitatively, by using a partial characteristic quantity. An image that suits the user's preferences may be used as the reference image. In that case, since the image that suits the user's preferences can be classified into a feeling category, it is possible to perform a process of comparing the target image to the image that suits the user's preferences, for example.

Aside from the feeling index, the feeling category of an object in an image can be recognized by the partial characteristic quantity. Therefore, in the case of an image taken inside a room, for example, human feelings toward an object itself in the room can be added to the evaluation of feelings toward the overall image.

As shown in FIG. 5, the present embodiment uses, as the reference feeling index, a 9-dimensional vector in which (a first frequency analysis vector), (a second frequency analysis vector), (a light/dark histogram analysis vector), (an R histogram analysis vector), (a G histogram analysis vector), (a B histogram analysis vector), (a Y histogram analysis vector), (a first partial characteristic vector), and (a second partial characteristic vector), obtained by performing frequency analysis, light/dark histogram analysis, RGBY histogram analysis, and partial characteristic vector analysis, are used as elements.

The frequency analysis 1 vector may be any index obtained by Fourier series expansion, and the frequency analysis 2 vector may be any index obtained by fractal frequency analysis, for example. In the case of a color distribution, the partial characteristic quantity calculation unit 209 should handle the color distribution as a tensor, and compress the tensor into a vector for use. That is, a plurality of vectors are extracted from different mathematical approaches or different analytical results, and a vector extracted from analytical processing suitable for evaluation should be selected.

The present embodiment uses a 9-dimensional vector by way of illustration, but a vector that uses an analytical result necessary for evaluation as an element should be selected in processing of each of the frequency calculation unit 207, the histogram calculation unit 208, and the partial characteristic quantity calculation unit 209.

As for the reference feeling index of each feeling category, a reference feeling index may be calculated for each of a plurality of reference images included in each feeling category, or one new reference feeling index may be generated by calculating a weighted sum of a plurality of reference feeling indexes. In that case, it is effective to perform dimensional compression using SIFT.

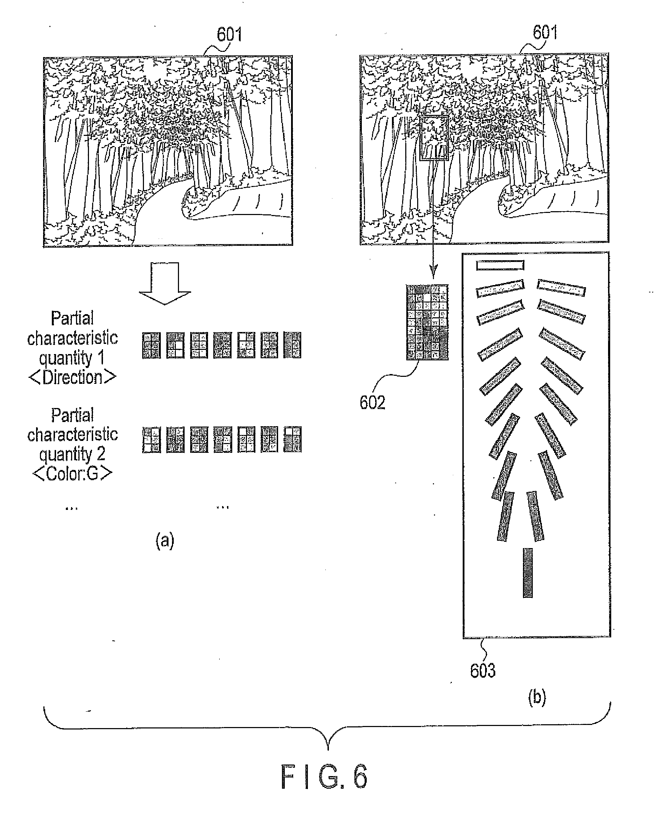

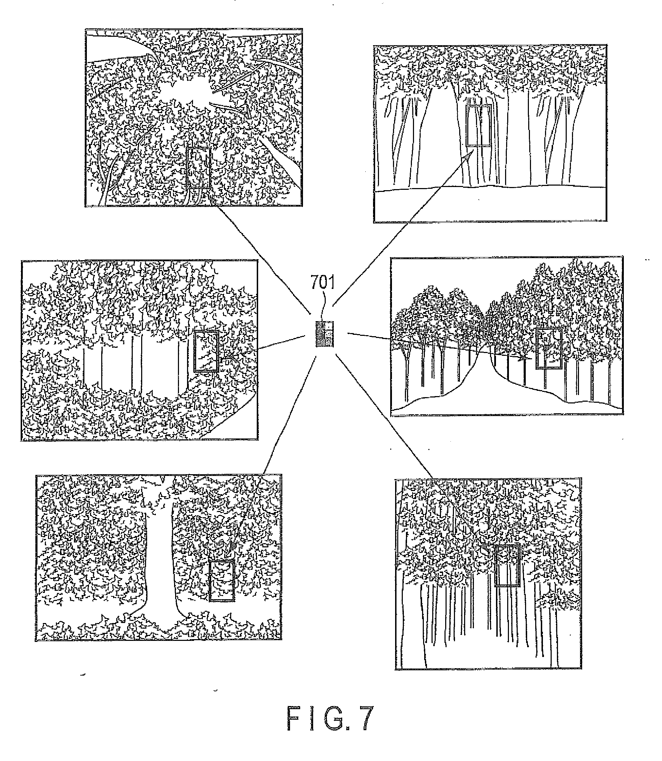

Next, a method of causing the partial characteristic quantity calculation unit 209 to calculate a partial characteristic quantity will be described with reference to FIGS. 6 and 7.

The partial characteristic quantity should preferably be a characteristic quantity that can be adapted by L1-regularization (Lasso regularization), but the target object can be identified by L2-regularization or a combination of partial characteristic quantities as long as the solution is partially sparse, even if the solution is not completely sparse.

As shown in FIG. 6 (a), the partial characteristic quantity is obtained by extracting a partial region 602 from one image 601, and then extracting a smaller image region as a partial characteristic quantity 603 from the partial region 602 on the basis of luminance, for example. As shown in FIG. 6 (b), the first partial region 602 cut from the image 601 may be used as the partial characteristic quantity, and a color histogram characteristic quantity or a color directivity characteristic quantity may be used as the partial characteristic quantity.

It is also possible to use one partial characteristic quantity as a common characteristic quantity 701, as shown in FIG. 7, if images exist that have similar partial characteristic quantities, as a result of checking whether the reference images share a common partial characteristic quantity after the partial characteristic quantities are extracted. The partial characteristic quantity may be a reference image extracted by PCA or ICA, for example, or a result obtained by letting the user's preferences be learned may be used.

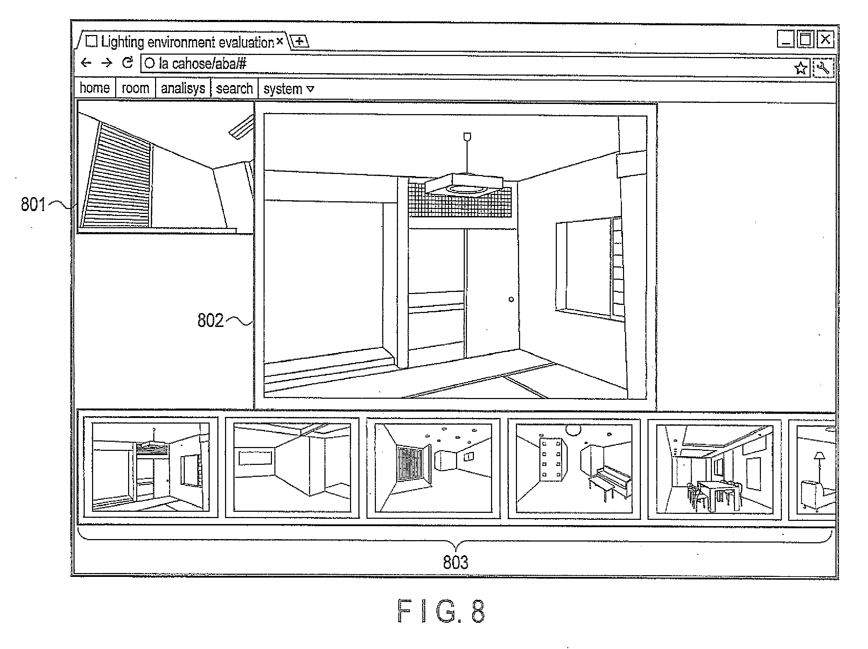

Next, a display example of the environment evaluation apparatus according to the first embodiment will be described with reference to FIG. 8.

FIG. 8 is an example of an interface displayed on the display 104. A comparative image 802 most similar to a target image 801 is displayed with respect to the target image 801. In this case, an image having a lighting environment of an interior space most similar to the target image 801 is displayed. Further, other comparative images 803 are displayed at the lower part of the screen in decreasing order of degree of similarity.

Thereby, it is possible to grasp easily what images exist as images having a lighting environment of an interior space visually similar to the target image. As well as comparative images, reference images belonging to the feeling category of the target image may be displayed.

### (Modification of the First Embodiment)

As a modification of the first embodiment, parameters of numeric values of each feeling category, search conditions, and whether a correction is performed or not may be changed as desired by the user.

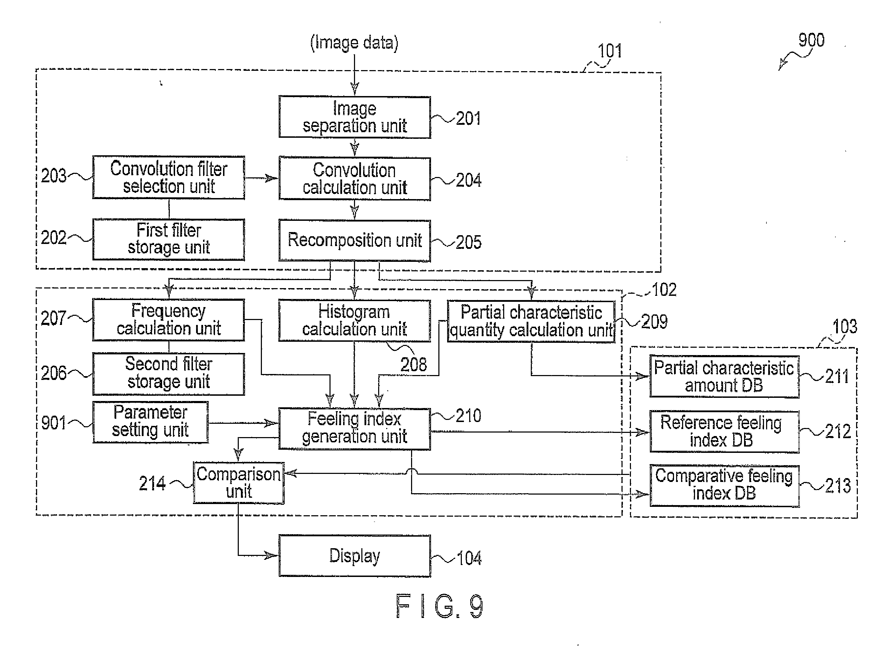

An environment evaluation apparatus according to the modification of the first embodiment will now be described with reference to FIG. 9.

An environment evaluation apparatus 900 shown in FIG. 9 includes a parameter setting unit 901, in addition to the environment evaluation apparatus 100 according to the first embodiment shown in FIG. 2. Operations of the environment evaluation apparatus 900 other than the parameter setting unit 901 are the same as those of the environment evaluation apparatus 100, and hence description thereof will be omitted.

The parameter setting unit 901 receives an instruction from the user to change the weight of feeling categories or change a comparison method, for example, and generates a feeling index according to the change.

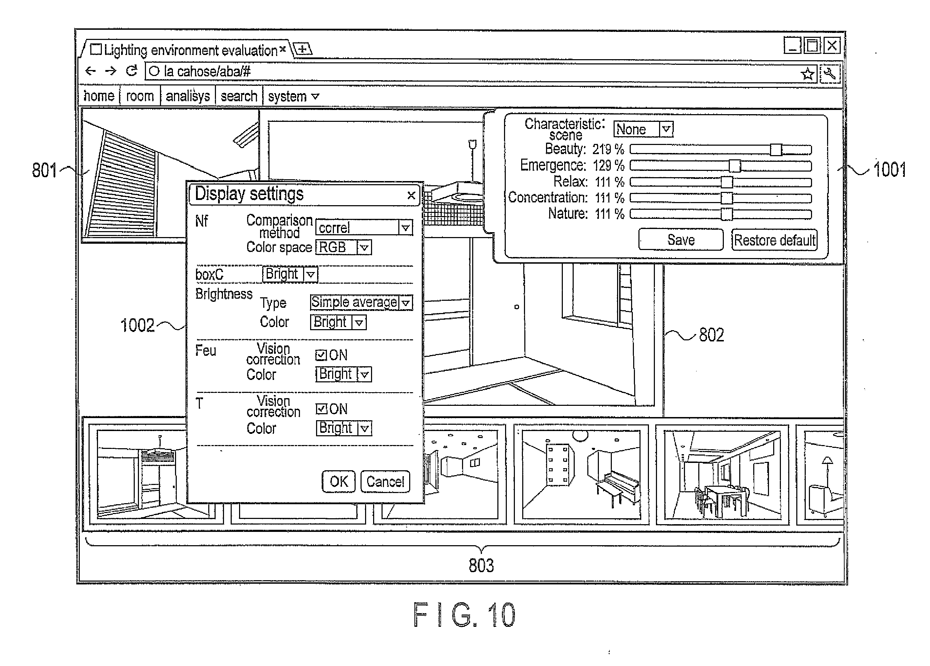

FIG. 10 shows an example of displaying a parameter change window on the display 104.

As shown in FIG. 10, a parameter change window 1001 is displayed, and a numerical value (weight) of each feeling category is changed by scrolling a bar. According to the change in numerical value, the comparison unit 214 compares the changed feeling index with the comparative feeling index, and a comparative image belonging to a feeling category closest to that of the target image is displayed as a similar image. Further, a setting window 1002 for changing settings of screen display or an image comparison method is displayed. By setting a comparison method, setting is made as to which index (vector) included in the feeling indexes should be evaluated with high priority.

Thereby, it is possible to easily grasp what feeling is expected toward the illumination environment of the interior space by changing the feeling category of the target image, merely by setting a parameter.

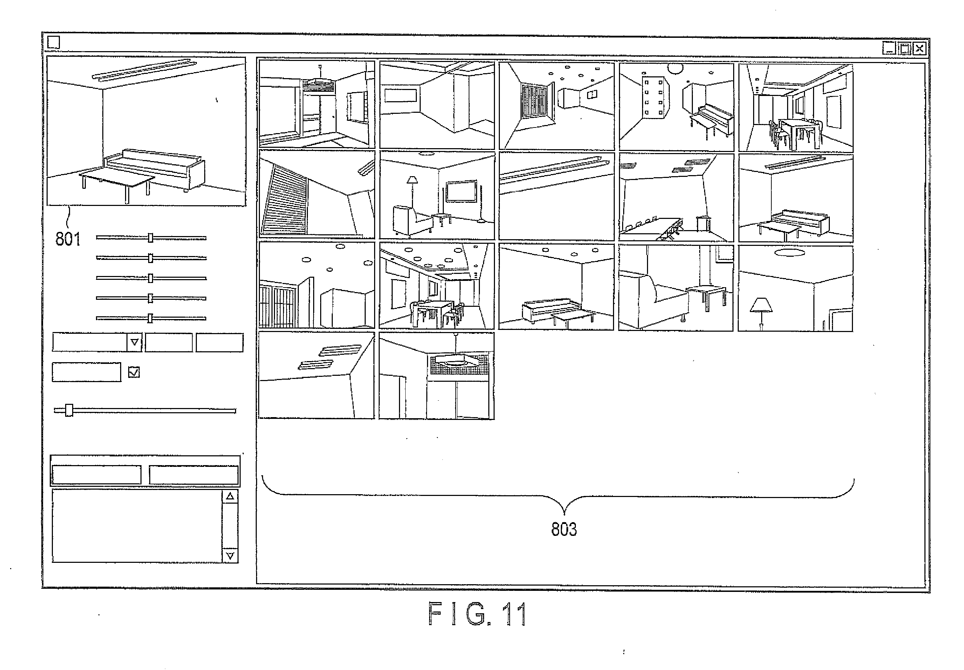

Another example of image display on the display 104 is shown in FIG. 11.

By displaying a plurality of similar images as a list, as shown in FIG. 11, it is possible to easily grasp where the feeling of the current room is placed, a list of rooms having a similar feeling, and what type of rooms exist in a more natural direction.

According to the above-described first embodiment, it is possible to easily grasp what type of environments exist as an environment of a level similar to the current environment by calculating a feeling index from an image and displaying an image similar to the feeling index from among comparative images classified into a feeling category, which represents impressions that the user derives from the image. Further, by changing a parameter of the feeling category and changing a weight of the feeling index, it is possible to easily grasp how the current environment changes.

### (Second Embodiment)

In the second embodiment, a case is described where an environment evaluation apparatus is associated with a TV set installed in a house. Since a TV is often equipped with a sensor for measuring brightness and allows the user to know a content of a broadcast program in advance by means of EPG, for example, the ambient brightness can be associated according to the content. Further, in the second embodiment, it is possible to estimate the feeling of the user who views contents, and change the lighting on the basis of a change in feeling of the user caused by a change in lighting.

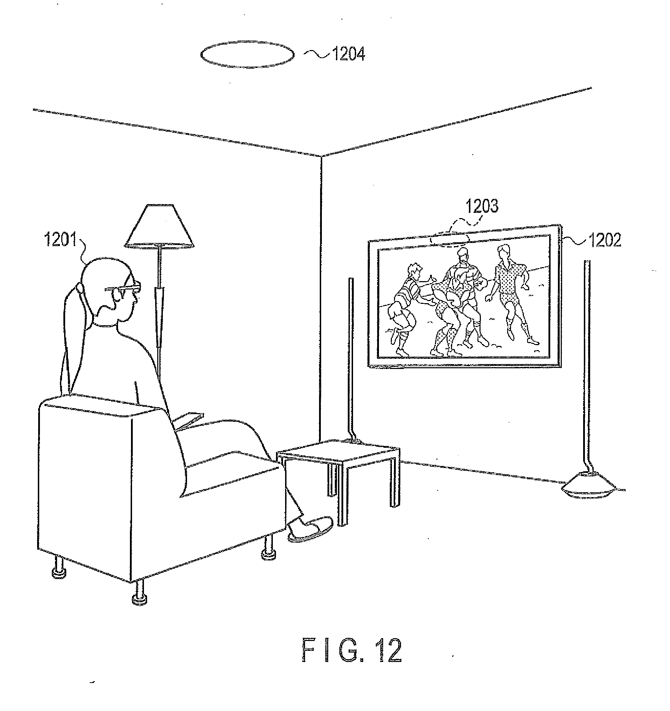

A conception diagram illustrating an example of using the environment evaluation apparatus according to the second embodiment will now be described with reference to FIG. 12.

FIG. 12 illustrates an example in which the user 1201 is viewing a broadcast program displayed on a TV 1202. A built-in sensor 1203 is provided in the TV 1202, and measures the illumination inside of a room lit by the variable lighting 1204.

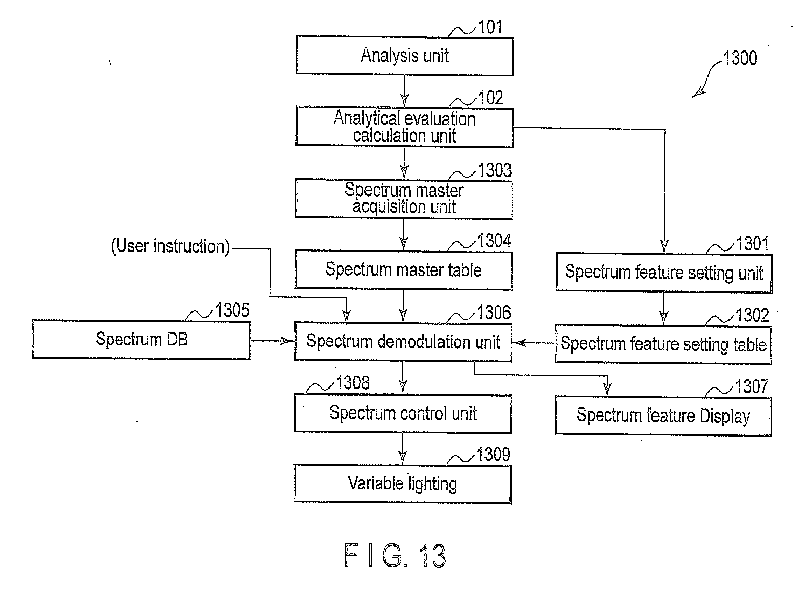

Next, the environment evaluation apparatus according to the second embodiment will be described with reference to the block diagram shown in FIG. 13.

The environment evaluation apparatus 1300 according to the second embodiment includes an analysis unit 101, an analytical evaluation calculation unit 102, a spectrum feature setting unit 1301, a spectrum feature setting table 1302, a spectrum master acquisition unit 1303, a spectrum master table 1304, a spectrum database 1305, a spectrum demodulation unit 1306, a spectrum feature display 1307, and a spectrum control unit 1308.

The analysis unit 101 acquires an interior space image, which is an image of a lighting environment of an interior space, and performs the same analysis as that of the first embodiment.

As in the first embodiment, the analytical evaluation calculation unit 102 performs frequency analysis, histogram analysis, and partial characteristic quantity analysis on the interior space image, and generates a feeling index.

The spectrum feature setting unit 1301 sets a lighting spectrum according to the feeling category on the basis of the feeling index from the analytical evaluation calculation unit 102. In this case, a feeling spectrum, which is a spectrum of lighting set according to feelings such as skin, nature, concentration, and relax, including color rendering properties, is set. If the number of lighting systems is one, a spectrum of the one lighting system is set as the feeling spectrum, and if the number of lighting systems is more than one, a space distribution of spectrums of the more than one lighting systems is set as the feeling spectrum. The feeling spectrum may be generated on the basis of the reference feeling index of each feeling category, as well as the feeling index.

The spectrum feature setting table 1302 receives the feeling spectrum from the spectrum feature setting unit 1301, and stores the feeling spectrum of each feeling category.

The spectrum master acquisition part 1303 acquires the current lighting spectrum.

The spectrum master table 1304 acquires the current lighting spectrum from the spectrum master acquisition part 1303, and stores the acquired current lighting spectrum.

The spectrum DB 1305 stores a spectrum of ideal lighting.

The spectrum demodulation unit 1306 receives the current lighting spectrum to be stored from the spectrum master table 1304, and the feeling spectrum from the spectrum feature setting table 1302. If an ideal lighting spectrum is already stored in the spectrum DB 1305, the spectrum demodulation unit 1306 performs spectrum synthesis on the current lighting spectrum by defining the ideal lighting spectrum as an objective, and generates a synthetic spectrum. If a lighting spectrum is not stored in the spectrum DB 1305, the spectrum demodulation unit 1306 performs spectrum synthesis on the current lighting spectrum by defining the feeling spectrum as an objective, and generates a synthetic spectrum.

The spectrum feature display 1307 displays a parameter that can be changed by the spectrum demodulation unit 1306.

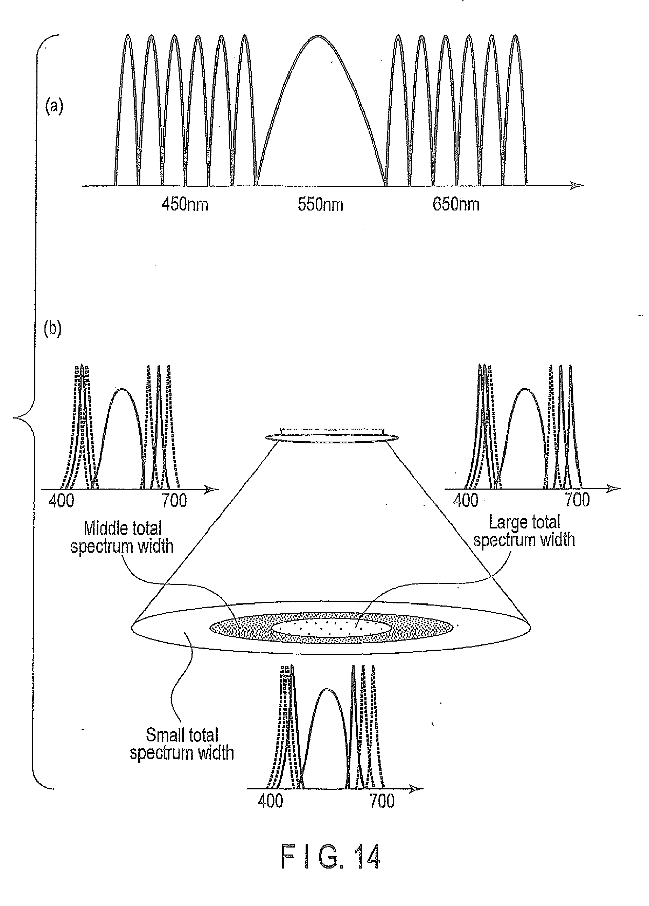

The spectrum control unit 1308 receives the synthetic spectrum from the spectrum demodulation unit 1306, and controls the variable lighting 1309 on the basis of the synthetic spectrum. More specifically, the illumination of lighting, the color temperature, the light illumination position, and the like are controlled. A case is assumed where multi-spectrum LED lighting is used as the variable lighting 1309, but any lighting that can change the illumination, the color, and the light illumination position can be used.
A conception diagram of a spectrum of lighting will now be described with reference to FIG. 14.

FIG. 14 (a) illustrates a wavelength of light from lighting, and FIG. 14 (b) illustrates a relationship between a distance from lighting and a total width of a spectrum.

The width of a spectrum is determined by the wavelength of the spectrum of the blue region (450 nm or less) and the red region (650 nm or greater). Therefore, in order to adjust the color temperature that provides a warm feeling, the total width of the spectrum determined by the blue region and the red region should be adjusted. Change in wavelength of a spectrum can be performed by applying light of a desired wavelength using lighting that outputs light of different wavelengths. If the light is of a single wavelength, the wavelength of the spectrum should be adjusted using liquid crystals or a diffraction grating.

Further, as shown in FIG. 14 (b), in a region farther from an illumination zone directly below the lighting, since a request for increase in band of a spectrum becomes smaller, the total width of the spectrum can be small.

For example, in an educational program with a focus on learning, the color temperature should desirably be increased. That is, the spectrum control unit 1308 should control the spectrum of the variable lighting such that the color temperature increases, according to the feeling category "concentration" or "study". When more than one lighting system exists and the user wants to improve the concentration on_study, the illumination should be increased in the area of the hands of the user.

When the user watches a movie, by increasing the index of the feeling categories "nature" and "relax", for example, in addition to a video display method such as a theater mode installed in the TV, a viewing environment favorable for the user can be provided. In that case, the interior lighting environment should be changed by changing the lighting spectrum in a part including the wavelength of the red region (650 nm or greater).

In the case of 3D TV viewed with 3D glasses, since the brightness inside of a room in the direction of the viewer's eyes can be measured using a sensor of the glasses, it is possible to provide an optimum lighting environment according to the brightness and a content to be viewed by measuring the interior brightness in the direction of the viewer's eyes.

In the case of stereoscopic view called glasses-free 3D, which is achieved without glasses, the distance between the TV and the viewer is measured in advance. Therefore, by estimating the brightness of the TV screen and the brightness of the periphery of the user on the basis of the distance between the TV and the viewer, the spectrum control unit 1308 can control the illumination of lighting such that a burden on the user is reduced.

In setting the lighting environment, the user's preferences may be learned mechanically, or may be learned by manual control. Thereby, processing can be performed according to the user's preferences and feeling categories.

Further, by providing a sensor inside of a room and measuring a lighting environment inside of the room using the sensor, it is possible to control the illumination environment of the interior space in real time.

Further, by performing analytical evaluation on images including video of a program being displayed on the TV as interior space images acquired by the analysis unit 101, it is possible to control the illumination environment adjusted for the program. In the case of a travel program, for example, it is possible to improve the sense of closeness to the environment being broadcast (fine weather, cloudy weather, in a cave, etc.) In the case of a beauty and cosmetics program, it is possible to set an environment suitable for the skin condition.

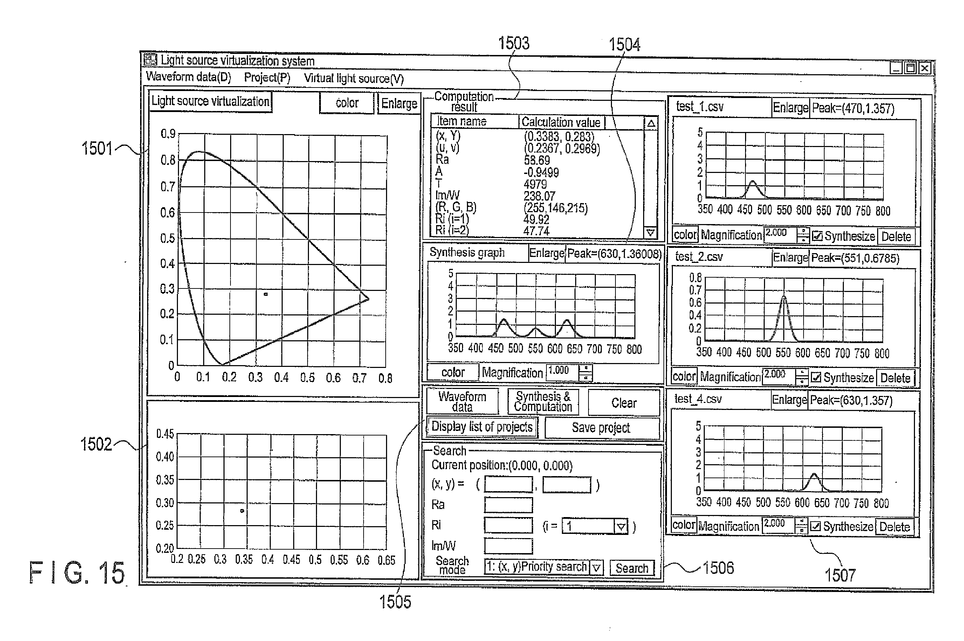

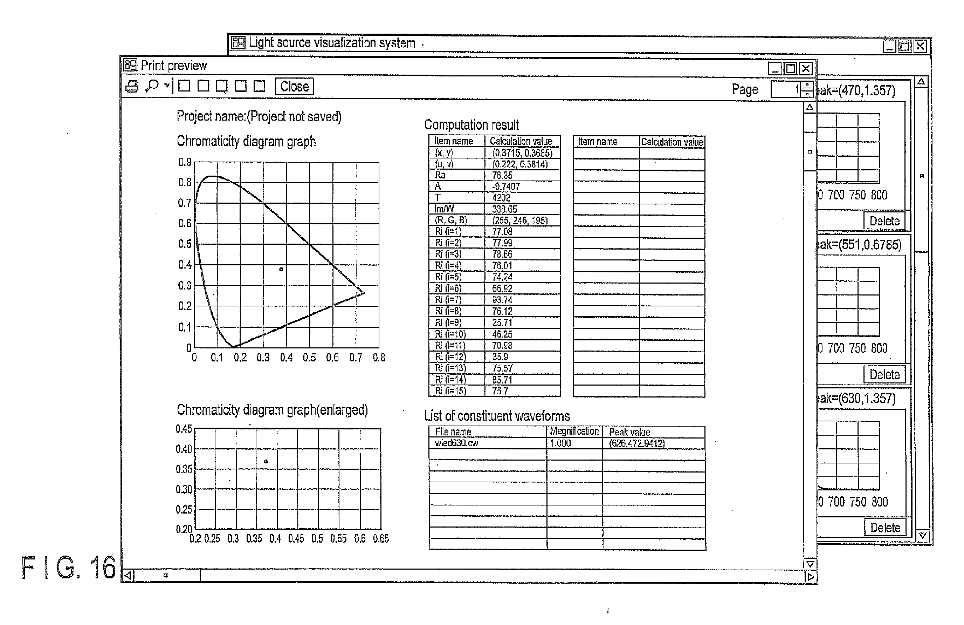

Next, an example of displaying spectrum settings on the spectrum performance display 1307 is shown in FIGS. 15 and 16.

FIG. 15 illustrates an example of a setting screen, in which a chromaticity diagram 1501, a chromaticity diagram (in an enlarged view) 1502, a computation result 1503, a synthesis graph 1504, an operation button 1505, a search form 1506, and a lighting spectrum 1507 are displayed. The chromaticity diagram 1501 illustrates chromaticity coordinates. The chromaticity diagram (in an enlarged view) 1502 is an enlarged view illustrating the periphery of a measurement point in the chromaticity diagram 1501. The computation result 1503 is a window showing parameters of coordinate points. The synthesis graph 1504 illustrates a spectrum obtained by synthesizing a plurality of lighting spectrums. The operation button 1505 is a button for operating a spectrum calculation instruction, or plotting of other graphs. The search form 1506 is a window for searching for a coordinate point in the chromaticity diagram. The lighting spectrum 1507 illustrates the current spectrum of each lighting system.

The user is also capable of setting the spectrum by manually making changes to a parameter displayed on the spectrum performance display 1307. The parameter value changed by the instruction from the user is input to the spectrum modulation unit 1306, and spectrum synthesis is performed by the spectrum modulation unit 1306 according to the parameter value.

Further, the computation result may be displayed in a different window. An example of displaying the computation result in a different window is shown in FIG. 16. By thus displaying the computation result independently, it becomes easy to compare the computation result with a plurality of computation results.

In the second embodiment, a case is assumed where the environment evaluation apparatus is associated with a TV, but a TV is not necessarily required in regard to control of lighting. In that case, a period of time may be taken into consideration.

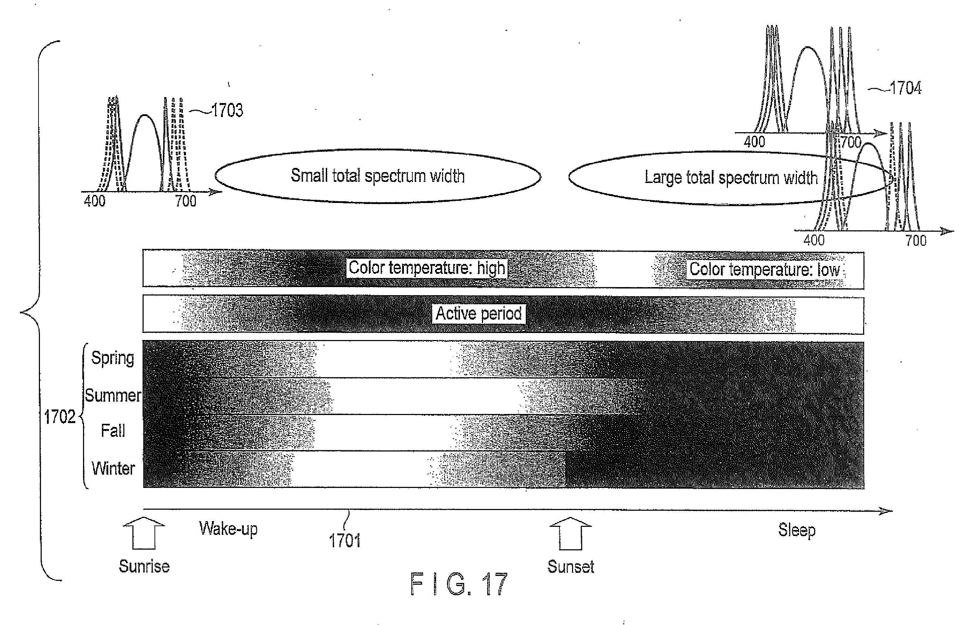

A conception diagram of a lighting spectrum which varies with time will now be described with reference to FIG. 17.

FIG. 17 illustrates an example of setting color temperature according to a circadian rhythm 1701, which indicates change of time of the day, and a circaseasonal rhythm 1702, which indicates change of seasons.

The spectrum modulation unit 1306 may change the spectrum to a spectrum 1703 and a spectrum 1704 according to the circadian rhythm 1704, in view of time settings, for example. Further, lighting may be controlled according to the circaseasonal rhythm 1702, which is based on the seasons of Japan. The sense of seasons varies by country, and such variation can be dealt with by changing the setting value. The circadian rhythm and the circaseasonal rhythm can be further adjusted by simultaneously changing detailed settings as to the position and direction of lighting, whether the lighting is indirect or direct, and the like.

According to the above-described second embodiment, by controlling the illumination, the color temperature, and the illumination position of lighting according to the broadcast program of the TV, the circadian rhythm, and the circaseasonal rhythm, for example, it is possible to provide a lighting environment optimum for the user.

### (Third Embodiment)

In the third embodiment, instead of displaying a similar image that is similar to a target image, augmented reality (AR) is used in an environment to be measured. Thereby, it is possible for the user to easily experience how the current interior environment changes.

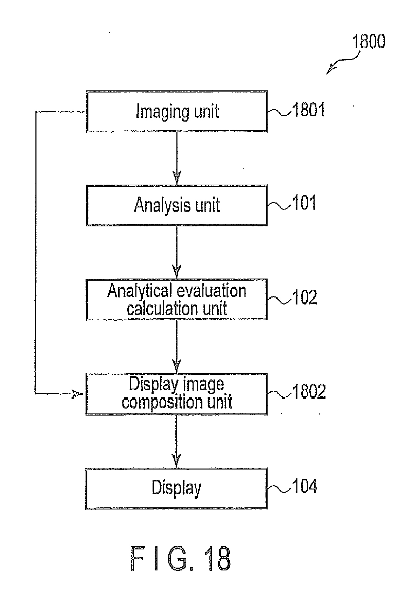

An environment evaluation apparatus according to the third embodiment will now be described with reference to the block diagram shown in FIG. 18.

An environment evaluation apparatus 1800 according to the third embodiment includes an imaging unit 1801, an analysis unit 101, an analytical evaluation calculation unit 102, a display image composition unit 1802, and a display 104.

The processes of the analysis unit 101 and the analytical evaluation calculation unit 102 are the same as those of the first embodiment, and hence description of such processes will be omitted.

The imaging unit 1801 is a camera, for example, and acquires a target image by photographing an interior space. In that case, the imaging unit 1801 photographs the target image such that a marker is included in an angle of view.

The display image composition unit 1802 receives the target image from the imaging unit 1801, and a reference feeling index of a feeling category from the analytical evaluation calculation unit 102, generates a lighting image based on the reference feeling index, superimposes the lighting image on the target image, and thereby obtains a composition image.

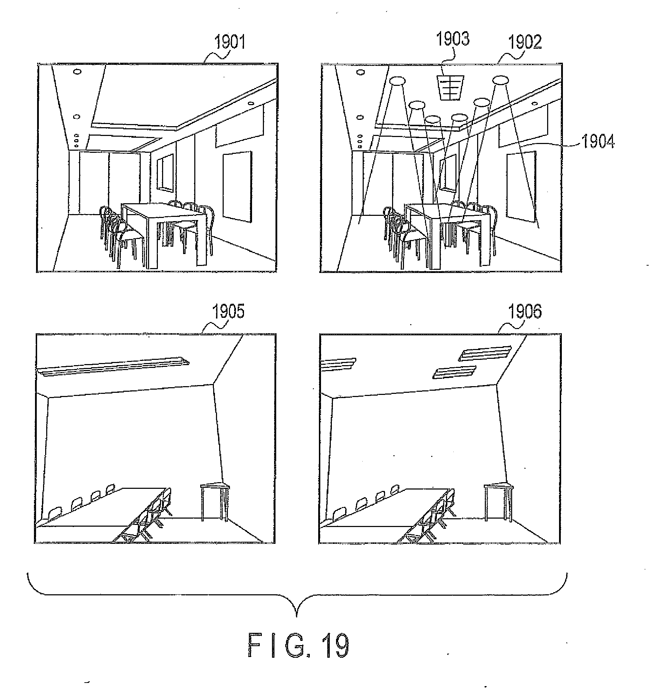

Next, an example of displaying a composition image on the display will be described with reference to FIG. 19.

A device for causing the display to display a composition image may be any device capable of outputting information to a screen and achieving an AR environment, preferably equipped with a browser function. Examples of such a device include a display in the form of glasses, a smartphone, a tablet, and a PC.

FIG. 19 illustrates a concrete example of a composition image when a marker is photographed using AR. An image 1902 is an example of a composition image generated using the environment evaluation apparatus according to the third embodiment on the basis of an image 1901 yet to be subjected to AR processing. Lighting is generated on the basis of the feeling index at the position of the marker 1903, and light beams 1904 from the lighting are also displayed. The light beams may be displayed on the basis of calculation of extension in angle, or may be exaggerated for display for the purpose of simulated evaluation. FIG. 19 shows a case where the light beam is exaggerated for display.

A composition image 1906, obtained by subjecting the image 1905 to an environment evaluation process, illustrates a case where the number of lighting systems is changed from one to more than one. In order to confirm a partial reflective condition of a wall surface or the like inside of the room, it is possible to compare the relationship between the wall surface or the like of the background and lighting, by setting the transmittance α of the wall to be higher than the actual value, for example. Further, by displaying change in the color of lighting, such as warm colors or cold colors, it is possible to evaluate the overall design of the room.

According to the third embodiment, by performing environment evaluation using AR, it is possible to make changes to a variety of lighting environments and interior environments that can be achieved by AR. It is thereby possible to superimpose simulated lighting or an interior environment based on the feeling index on the target image, instead of based on an image similar to the target image. Accordingly, it becomes possible for the user to experience changes in lighting or environment based on the feeling category in an interior environment that the user wants to value.

### (Fourth Embodiment)

In the fourth embodiment, a case is assumed where evaluation of an environment including an AR environment is performed using cloud computing.

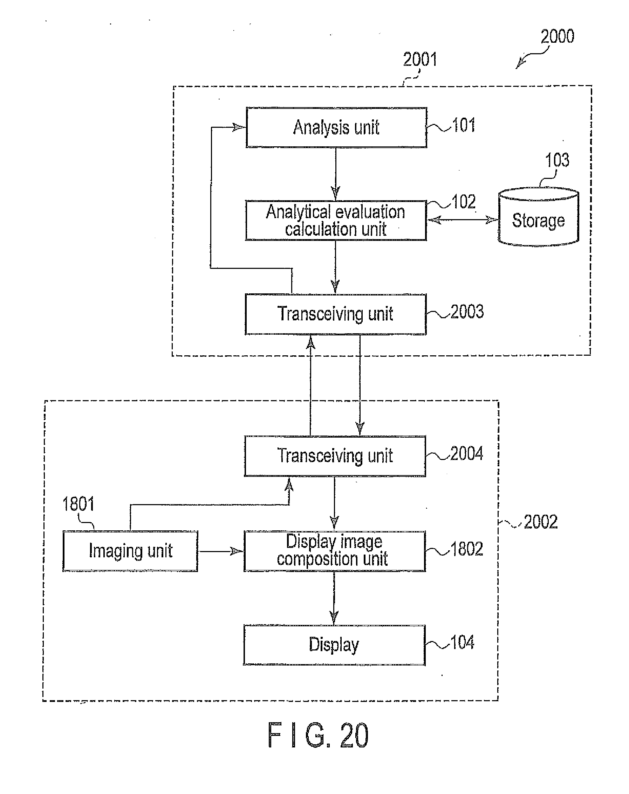

An environment evaluation apparatus according to the fourth embodiment will now be described with reference to the block diagram shown in FIG. 20.

An environment evaluation apparatus 2000 according to the fourth embodiment includes a server 2001 and a client 2002. The server 2001 includes an analysis unit 101, an analytical evaluation calculation unit 102, a storage 103, and a transceiving unit 2003. The client 2002 includes an imaging unit 1801, a display image composition unit 1802, a display 104, and a transceiving unit 2004.

The operations of the analysis unit 101, the analytical evaluation calculation unit 102, the storage 103, the display 104, the imaging unit 1801, and the display image composition unit 1802 are the same as those of each block of the environment evaluation apparatus according to the above-described embodiments, and hence detailed descriptions of such operations will be omitted.

Each of the transceiving unit 2003 and the transceiving unit 2004 transmits and receives data.

Next, a flow of an environment evaluation process between the server 2001 and the client 2002 will be described.

The imaging unit 1801 of the client 2002 photographs a target image, and transmits image data of the target image to the server 2001 via the transmission unit 2004.

The analysis unit 101 of the server 2001 receives the image data of the target image from the client 2002 via the transceiving unit 2003, and performs analytical processing. After that, the analytical evaluation calculation unit 102 obtains a feeling index by performing analytical evaluation on the image subjected to analytical processing, and transmits the feeling index to the client 2002 via the transceiving unit 2003.

The display image composition unit 1802 of the client 2002 receives the feeling index from the server 2001 via the transceiving unit 2004, generates a lighting image on the basis of the feeling index, superimposes the lighting image on the target image photographed by the imaging unit 1801, and thereby obtains a composition image. After that, the display 104 displays the composition image.

It is also possible to collect geographical information that can be used by the environment evaluation apparatus 1800 by using the Global Positioning System (GPS).

For example, the client 2002 transmits a target image added with the GPS information to the server 2001, and receives an image obtained by performing an analytical evaluation process on the target image. The client 2002 selects an environment that suits the user's preferences by performing a simulation of changing the environment in AR or searching for interior environments. The server 2001 contains a series of information, including the target image of the user and environment selection by the user. By associating such information with GPS information, the server 2001 is capable of collecting regional data, which is data of each area of users.

By performing mechanical learning such as boosting, for example, using the regional data, it is possible to perform environment evaluation and environment recommendation in more detail.

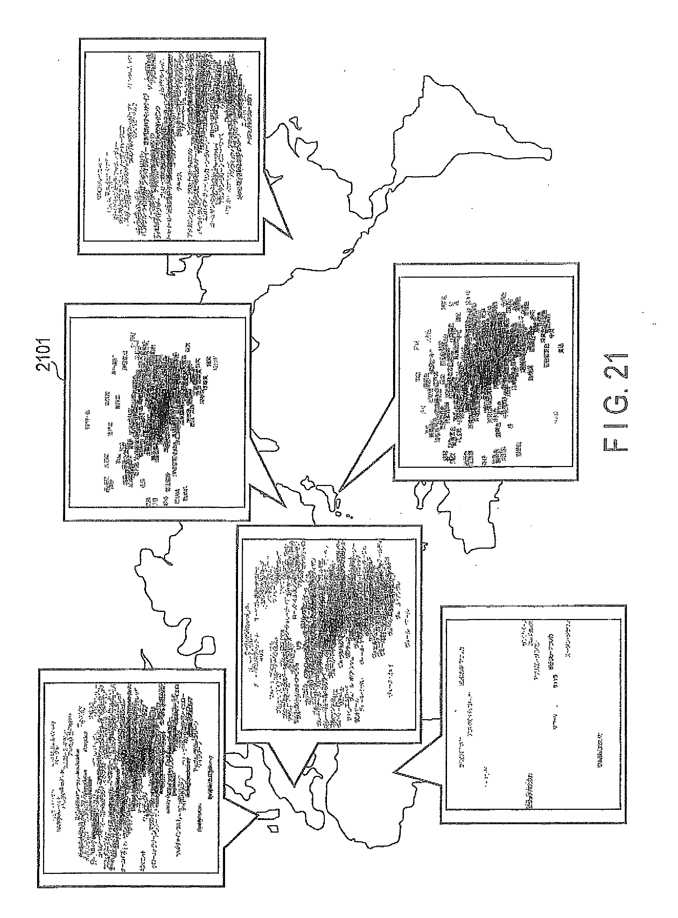

Next, an example of the regional data will be described with reference to FIG. 21.

FIG. 21 illustrates traditional colors of each country of the world in the Munsell system 2101. The server 2001 collects GPS information, information on the environment selection by the user, and information on the environment that suits the user's preferences. Thereby, evaluation of the environment including cultural backgrounds such as traditional colors of each area can be performed. Such information on traditional colors can be used when color histogram analysis is performed in the histogram calculation unit 208, for example.

According to the above-described fourth embodiment, by causing the server to perform an environment evaluation process using AR, by means of cloud computing using a server and a client, it is possible to greatly reduce the processing quantity on the client side. Further, since the server side collects a target image added with GPS information, it is possible to collect information on characteristics of each country and area, and to perform environment evaluation in a more user-friendly manner.

In the above-described embodiment, a case is assumed where a target image is classified into a predetermined feeling category on the basis of a reference image, but a new feeling category may be generated by compressing a vector, which is a feeling index of an image, by means of SIFT, and reconstructing the feeling category.

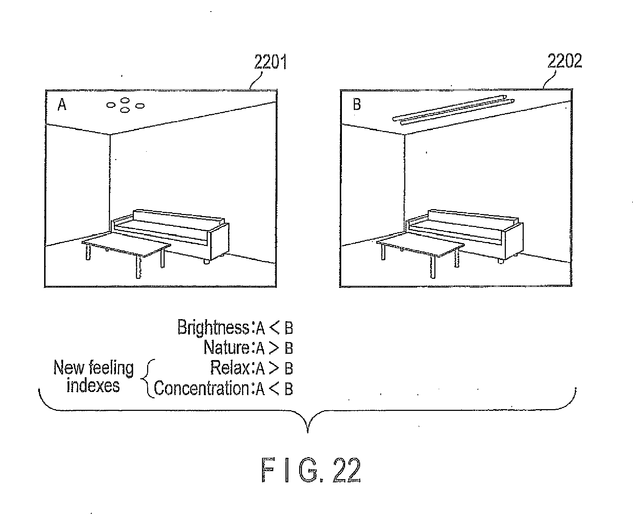

An example of performing environment evaluation using the reconstructed feeling category is shown in FIG. 22.

FIG. 22 illustrates an example in which categories "relax" and "concentration" are generated as new feeling categories when feeling categories "brightness" and "nature" already exist. These feeling indexes make it possible to easily compare which of the image 2201 and the image 2202 has a higher value in each of the four feeling categories.

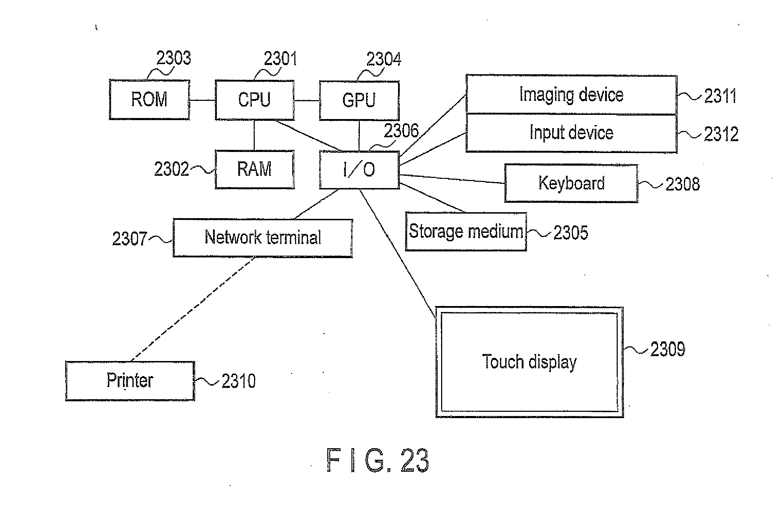

Next, an example of installing the above-described environment evaluation apparatus will be described with reference to FIG. 23.

As shown in FIG. 23, the environment evaluation apparatus may be installed in a computer structure in which a CPU 2301, a RAM 2302, a ROM 2303, a GPU 2304, and a storage medium 2305 are connected to an input/output port 2306. A network terminal 2307 for connecting various types of data and programs to an external network environment such as the Internet is connected to the input/output port 2306. The network terminal does not necessarily need to be wireless, and may be wired. The CPU 2301 may be equipped with a function similar to that of the GPU 2304. The storage medium 2305 is not limited to an SSD or an HDD, and any storage medium connected to the evaluation apparatus, such as a storage region on the cloud, may substitute for the function thereof.

A keyboard 2308 for inputting data, and a display (shown as a touch-panel liquid crystal display) 2309 for displaying a command and data is connected to the input/output (I/O) port 2306. A printer 2310 for printing the command and data is connected via a network terminal 2307 over a network.

Further, a camera, i.e., a imaging device 2311, for photographing an environment such as a room is connected to the input/output port 2306. As an input device, an input device 2312 for inputting image data output from a digital camera is also connected.

In the present embodiment, a case is described where image data from the imaging device 2311 is input to the environment evaluation apparatus, but data used for evaluation by the environment evaluation apparatus is not limited to data input by the imaging device 2311. That is, an image obtained using the input device 2312 or data or an image existing in the storage medium 2305 may be used. The environment evaluation apparatus, which performs image data calculation and uses a result thereof, may be any device capable of inputting image data, and may directly connect the photography device 2311 over a network, or may include an input interface of the image data.

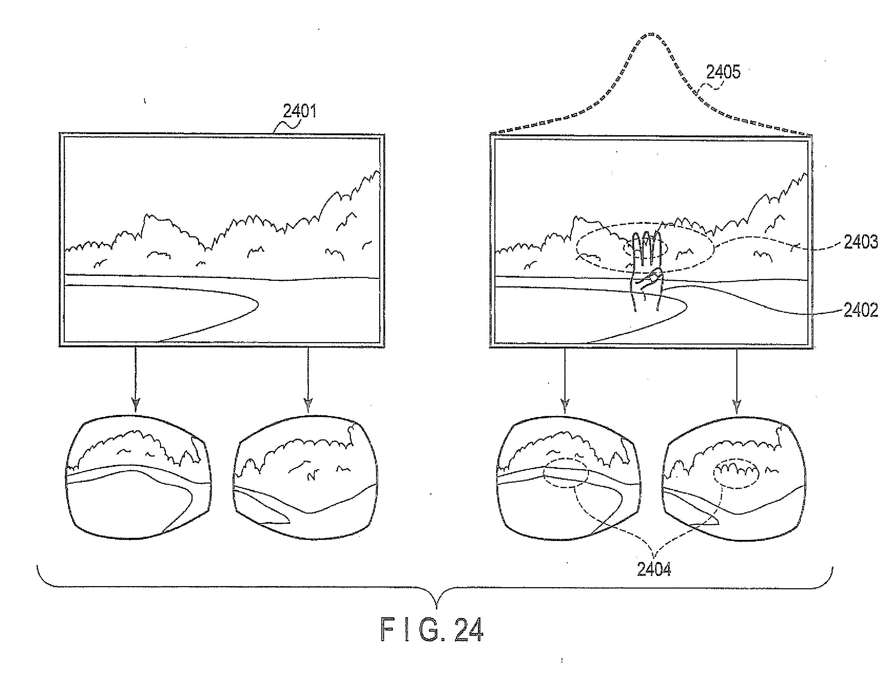

Next, characteristics of vision used in the present embodiment will be described with reference to FIG. 24.

In the conventional lighting environment measurement, it has been common to use a fisheye lens, considering the characteristics of human vision. In the present embodiment, however, in order to assume an image more faithful to vision, in particular, to a retinal image in processing, in view of a saccadic phenomenon 2401 and the fact that the central retinal image, i.e., three fingers 2402 of a reached out hand is the visual image in real time, as shown in FIG. 24, weight is given to partial regions 2304, 2404, so as to perform weighting in image processing. Weighting can be performed according to a gauss distribution 2405, for example. Thereby, weighting can be performed more in accordance with reality than an in-plane distribution, and any type of lens can be used.

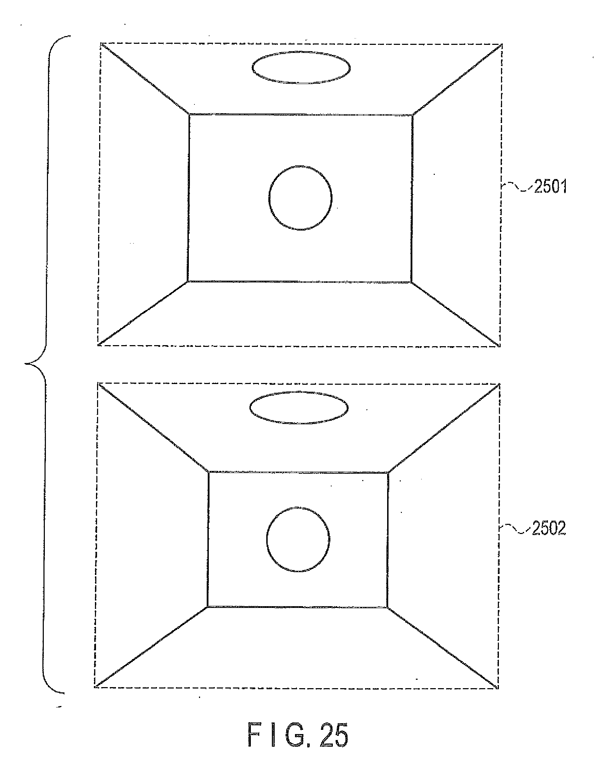

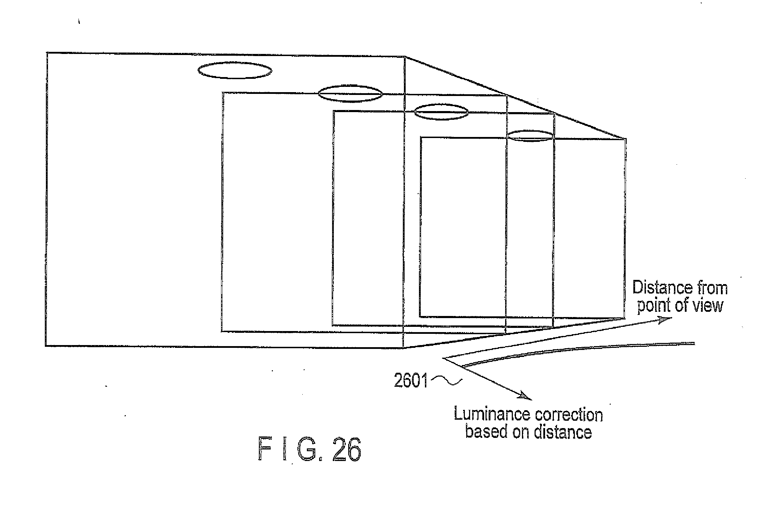

Next, the concept of depth perception will be described with reference to FIGS. 25 and 26.

It has been discovered that human attention generally affects vision, and it should therefore be desirable to consider the effect of attention when the environment is evaluated. For example, as shown in FIG. 25, compared with the image 2501, human vision perceives the image 2502, in which a rectangular at the center is smaller, to be great in depth. It is therefore desirable to make the luminance of the circle at the center of the image 2502 lower than that of the circle at the center of the image 2501.

Further, as shown in FIG. 26, when the depth can be estimated, brightness is corrected according to the depth at which the lighting in the image is present. Vision correction according to the present embodiment uses an approach different from the conventional approach in regard to the depth direction. More specifically, the brightness of the overall space is calculated considering correction of brightness using the correction coefficient 2601 based on the distance from the point of view.

The flow charts of the embodiments illustrate methods and systems according to the embodiments. It should be understood that each block of the flowchart illustrations, and combinations of blocks in the flowchart illustrations, can be implemented by computer program instructions. These computer program instructions may be loaded onto a computer or other programmable apparatus to produce a machine, such that the instructions which are executed on the computer or other programmable apparatus create means for implementing the functions specified in the flowchart block or blocks. These computer program instructions may also be stored in a computer-readable memory that can direct a computer or other programmable apparatus to function in a particular manner, such that the instruction stored in the computer-readable memory produce an article of manufacture including instruction means which implement the function specified in the flowchart block or blocks. The computer program instructions may also be loaded onto a computer or other programmable apparatus to cause a series of operational steps to be performed on the computer or other programmable apparatus to produce a computer programmable apparatus which provides steps for implementing the functions specified in the flowchart block or blocks.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An environment evaluation apparatus **characterized by** comprising:
a generation unit (210) configured to generate a feeling index representing a feeling toward a target image to be processed, the feeling index including at least one of a first index, a second index and a third index, the first index being obtained by performing frequency analysis on the target image, the second index being obtained by performing histogram analysis on the target image, the third index being a characteristic quantity of a group of pixels relating to at least one of a color and a luminance from a partial region of the target image;
a storage (103) configured to store a plurality of comparative images and corresponding comparative feeling indexes, according to each of feeling categories, the comparative images being images with which the target image is to be compared and being classified into the feeling categories using the comparative feeling indexes, the comparative feeling indexes representing feelings toward the comparative images, the feeling categories being categories based on feelings toward images; and
a comparison unit (214) configured to extract, as a similar image, at least one of the comparative images corresponding to at least one of the comparative feeling indexes having a degree of similarity to the feeling index not less than a threshold value, by comparing the feeling index with the comparative feeling indexes.

2. The apparatus according to claim 1, **characterized by** further comprising:
a separation unit (201) configured to extract, from an image, pixel information items including a value relating to a color and luminance of a pixel;
a calculation unit (204) configured to perform convolution calculation on the pixel information items using a filter; and
a recomposition unit (205) configured to recompose the convolutional calculated pixel information items to generate a recomposition image, **characterized in that**
the generation unit (210) generates the feeling index, using the recomposition image as the target image.

3. The apparatus according to claim 1, **characterized in that** the feeling categories are generated by classifying a plurality of reference images having similar reference feeling indexes into the same group, the reference images being images used as the standard, the reference feeling indexes representing feelings toward the reference images.

4. The apparatus according to claim 3, **characterized in that** the comparative feeling indexes and the reference feeling indexes are generated by the same procedure as a procedure of the feeling index.

5. The apparatus according to claim 1, **characterized by** further comprising a display (104) configured to display the target image and at least one of the comparative images and the reference images.

6. The apparatus according to claim 1, **characterized in that** the feeling categories include at least one of nature, relax, concentration, emergence, beauty, and study.

7. The apparatus according to claim 1, **characterized by** further comprising:
a setting unit (1301) configured to set a feeling spectrum indicating a spectrum of lighting defined according to the feeling categories;
an acquisition unit (1303) configured to acquire a lighting spectrum of the current interior space;
a demodulation unit (1306) configured to perform a spectrum synthesis on the lighting spectrum by defining the feeling spectrum as an objective to obtain a synthetic spectrum; and
a control unit (1308) configured to control variable lighting such that a spectrum of light emitted from the variable lighting becomes the synthetic spectrum.

8. The apparatus according to claim 1, **characterized by** further comprising:
an imaging unit (1801) configured to take the target image; and
a composition unit (1802) configured to obtain a composition image by superimposing the target image on a lighting image generated according to one of the feeling categories.

9. An environment evaluation method **characterized by** comprising:
generating a feeling index representing a feeling toward a target image to be processed, the feeling index including at least one of a first index, a second index and a third index, the first index being obtained by performing frequency analysis on the target image, the second index being obtained by performing histogram analysis on the target image, the third index being a characteristic quantity of a group of pixels relating to at least one of a color and a luminance from a partial region of the target image;
storing, in a storage, a plurality of comparative images and corresponding comparative feeling indexes, according to each of feeling categories, the comparative images being images with which the target image is to be compared and being classified into the feeling categories using the comparative feeling indexes, the comparative feeling indexes representing feelings toward the comparative images, the feeling categories being categories based on feelings toward images; and
extracting, as a similar image, at least one of the comparative images corresponding to at least one of the comparative feeling indexes having a degree of similarity to the feeling index not less than a threshold value, by comparing the feeling index with the comparative feeling indexes.

10. The method according to claim 9, **characterized by** further comprising:
extracting, from an image, pixel information items including a value relating to a color and luminance of a pixel;
performing convolution calculation on the pixel information items using a filter; and
recomposing the convolutional calculated pixel information items to generate a recomposition image, wherein
the generating the feeling index generates the feeling index, using the recomposition image as the target image.

11. The method according to claim 9, **characterized in that**
the feeling categories are generated by classifying a plurality of reference images having similar reference feeling indexes into the same group, the reference images being images used as the standard, the reference feeling indexes representing feelings toward the reference images.

12. The method according to claim 11, **characterized in that** the comparative feeling indexes and the reference feeling indexes are generated by the same procedure as a procedure of the feeling index.

13. The method according to claim 9, **characterized by** further comprising displaying the target image and at least one of the comparative images and the reference images.

14. The method according to claim 9, **characterized in that** the feeling categories include at least one of nature, relax, concentration, emergence, beauty, and study.

15. The method according to claim 9, **characterized by** further comprising:
setting a feeling spectrum indicating a spectrum of lighting defined according to the feeling categories;
acquiring a lighting spectrum of the current interior space;
performing a spectrum synthesis on the lighting spectrum by defining the feeling spectrum as an objective to obtain a synthetic spectrum; and
controlling variable lighting such that a spectrum of light emitted from the variable lighting becomes the synthetic spectrum.

16. The method according to claim 9, **characterized by** further comprising:
taking the target image; and
obtaining a composition image by superimposing the target image on a lighting image generated according to one of the feeling categories.

17. A computer readable medium including computer executable instructions, wherein the instructions, when executed by a processor, cause the processor to perform a method **characterized by** comprising:
generating a feeling index representing a feeling toward a target image to be processed, the feeling index including at least one of a first index, a second index and a third index, the first index being obtained by performing frequency analysis on the target image, the second index being obtained by performing histogram analysis on the target image, the third index being a characteristic quantity of a group of pixels relating to at least one of a color and a luminance from a partial region of the target image;
storing, in a storage, a plurality of comparative images and corresponding comparative feeling indexes, according to each of feeling categories, the comparative images being images with which the target image is to be compared and being classified into the feeling categories using the comparative feeling indexes, the comparative feeling indexes representing feelings toward the comparative images, the feeling categories being categories based on feelings toward images; and
extracting, as a similar image, at least one of the comparative images corresponding to at least one the comparative feeling indexes having a degree of similarity to the feeling index not less than a threshold value, by comparing the feeling index with the comparative feeling indexes.
